# EUROPÄISCHE PATENTSCHRIFT

(11) **EP 0 807 915 B1**
(45) Veröffentlichungstag und Bekanntmachung des Hinweises auf die Patenterteilung: **26.06.2002**
(21) Anmeldenummer: 97107655.9
(22) Anmeldetag: 09.05.1997
(51) Int. Cl.: G08G 5/00, G08G 5/06, G01S 13/06, G01S 13/87

(54) **Verfahren und Anordnung zur Verkehrsüberwachung**
Traffic monitoring method and device
Procédé et dispositif de surveillance du trafic

(30) Priorität: 10.05.1996 DE 19619015
(43) Veröffentlichungstag der Anmeldung: 19.11.1997
(73) Patentinhaber: Deutsches Zentrum für Luft- und Raumfahrt e.V., 53175 Bonn (DE)
(72) Erfinder: Stieler, Bernhard, Prof. Dr. Ing., 38104 Braunschweig (DE)
(74) Vertreter: Einsel, Martin, Dipl.-Phys.

(56) Entgegenhaltungen:
- EP-A- 0 613 111
- US-A- 4 806 936
- PATENT ABSTRACTS OF JAPAN vol. 095, no. 003, 28.April 1995 & JP 06 342061 A (UNYUSHO SENPAKU GIJUTSU KENKYUSHO), 13.Dezember 1994,

## Beschreibung

Die Erfindung betrifft eine Anordnung zur Verkehrsüberwachung, insbesondere auf Flughäfen, bei der Einrichtungen zur Bestimmung von Positionen von Verkehrsteilnehmem vorgesehen sind, eine Kommunikationseinrichtung zur Kommunikation zwischen Verkehrsteilnehmem und einer Zentrale vorgesehen ist, eine Spracherkennungseinrichtung zur Spracherkennung einer Funkmeldung der Verkehrsteilnehmer und optional der Zentrale auf Seiten der Zentrale vorgesehen ist, eine Datenverarbeitungsanlage vorgesehen ist, eine Verbindung zwischen Datenverarbeitungsanlage und der oder den Einrichtungen zur Positionsbestimmung und der Spracherkennungseinrichtung vorgesehen ist, und die Datenverarbeitungsanlage Mittel zur Datenfusion ihrer Eingangsdaten zur Verfolgung der eindeutigen Ortung und Identifizierung der Verkehrsteilnehmer und Weitergabe der Zuordnungsergebnisse an eine Ausgabeeinheit aufweist. Sie betrifft außerdem ein Verfahren zur Verkehrsüberwachung, insbesondere auf Flughäfen, bei dem eine Positionsbestimmung eines Verkehrsteilnehmers durch Peilung und mitfels weiterer Informationen erfolgt, eine Kommunikation zwischen Verkehrsteilnehmer und einer Zentrale aufgezeichnet und einer Spracherkennung auf Seiten der Zentrale zugeführt wird, eine mit der Meldung des Verkehrsteilnehmers durchgegebene Kennung in der Spracherkennung seitens der Zentrale identifiziert und dem positionsbestimmten Verkehrsteilnehmer zugeordnet wird, die zugeordnete Identifizierung des positionsbestimmten Verkehrsteilnehmers kontinuierlich beibehalten wird, wobei die Quelle der Identifizierung bei dem Verkehrsteilnehmer liegt, und eine eindeutige Zuordnung zwischen Position und Identifizierung erfolgt.

Die kontinuierliche Zunahme des Luftverkehrs und die ständig komplexer werdenden Situationen auf und in der Umgebung von Flughäfen aufgrund der Zunahme der Verkehrsteilnehmer führt dazu, dass für eine effiziente Abwicklung des Verkehrs im Flughafennahbereich und auf dem Rollfeld möglichst automatisierte und vor allem wetterunabhängige Situationserfassungen erfolgen sollten.

Auf den Flughäfen befinden sich unterschiedliche Verkehrsteilnehmer: einerseits Flugzeuge, und zwar sowohl startende, landende, sich auf dem Rollfeld bewegende oder auch zu einem bestimmten Zeitpunkt sich nicht bewegende; femer auch Kraftfahrzeuge verschiedenster Art für Personenbeförderung oder aber auch zur Abwicklung von Wartung oder sonstigen Transporten.

Diese sehr unterschiedlichen Verkehrsteilnehmer erschweren natürlich eine sichere Ortung und Identifizierung, da viele von Ihnen für eine solche Ortung keine Ausrüstung besitzen und aus Kosten- und auch Komplikationsgründen gar nicht alle Verkehrsteilnehmer entsprechend ausgerüstet werden können.

Bekannt sind für die Situationserfassung unterschiedliche Sensorsysteme (EP 0 613 111 A1). Hierzu gehören beispielsweise nichtkooperative Sensoren, wie Induktionsschleifen in der Start- oder Rollbahn, Lichtschranken oder auch ein Primärradar, wie das sogenannte Airport Surface Detection Equipment (ASDE). Solche Sensoren können auch ohne ein eigenes Ortungselement im Verkehrsteilnehmer arbeiten. Das ASDE kann sogar Hindernisse auf der Startbahn oder den Rollwegen erkennen. Bestimmte Verkehrsteilnehmer verfügen auch über kooperative Sensoren, z.B. auf der Grundlage des Sekundärradars oder des Abfragens der im Flugzeug gewonnenen Ortung aus der Satellitennavigation per Automatic Dependent Surveillance (ADS). Diese erlauben gleichzeitig die Identifizierung des Teilnehmers, setzen aber die genannten Einrichtungen voraus, die noch in der Entwicklungsphase sind.

Die EP 0 613 111 A1 offenbart ein Flughafenüberwachungssystem und ein Verfahren zur Durchführung der Flughafenüberwachung mittels des Systems, bei dem Sensoren entlang der Rollbahn vorgesehen sind. Diese Sensoren erfassen Position und Geschwindigkeit der sich bewegenden Fahrzeuge oder Flugzeuge auf den Rollbahnen und Taxiways. Darüber hinaus ist eine Spracherkennungseinheit vorgesehen, die das Vokabular des am Boden befindlichen Controllers erkennt. Bekanntlich wiederholt der Controller am Boden bzw. im Tower nach erstmaligem Melden eines Piloten dessen Worte betreffend Flugzeugkennung, Flugnummer und Fluglinie. Die Spracherkennungseinheit analysiert das, was der Controller oder Lotse im Tower wiederholt. Mit Hilfe einer Datenfusionssoftware werden dann die Daten der Sensoren, die die Position der Flugzeuge und anderen Verkehrsteilnehmem auf dem Flughafen identifiziert haben und der Spracherkennungseinheit zusammengeführt. Die Spracherkennungseinheit kann für die Zwecke der Anwendung gemäß der EP 0 613 111 A1 auf die relativ einfache Ausführungsform beschränkt sein, in der lediglich die voreinprogrammierbare Sprache einer bekannten Person, nämlich die des Controllers oder Lotsen am Boden erkannt werden muss.

Aus der JP 6-342 061 ist ein weiteres System zur Ortung und Identifizierung von Objekten auf Flughäfen bekannt, bei dem Sensoren und eine Spracherkennung eingesetzt werden. Der technische Aufwand ist allerdings sehr groß, da zwei Peileinrichtungen erforderlich sind, um das Objekt mit der Signalquelle eindeutig zu orten. Der Einsatz von zwei Peileinrichtungen stößt auf finanzielle und auch technische Probleme, da Flugplätze im Regelfall nur eine Peileinrichtung besitzen.

Der Erfindung liegt die Aufgabe zugrunde, eine Anordnung und ein Verfahren zur Verkehrsüberwachung vorzuschlagen, die universeller einsetzbar sind, möglichst mit schon bestehenden Anlagen auskommen, möglichst geringe Nachrüstungsanforderungen auf den Flugplätzen und möglichst überhaupt keine Nachrüstungsanforderungen bei den Verkehrsteilnehmern verlangen, gleichwohl aber eine Ortung und Identifizierung der Verkehrsteilnehmer erlauben.

Diese, Aufgabe wird bei einer gattungsgemäßen Anordnung zur Verkehrsüberwachung, insbesondere auf Flughäfen dadurch gelöst, dass unter den Einrichtungen zur Bestimmung von Positionen von Verkehrsteilnehmem eine einzelne Peileinrichtung oder Peilerantenne zur Richtungsfeststellung der Kommunikationsübertragung ist, und dass zusätzlich noch eine weitere Ortungseinrichtung vorgesehen ist.

Die Aufgabe wird außerdem bei einem gattungsgemäßen Verfahren zur Verkehrsüberwachung, insbesondere auf Flughäfen dadurch gelöst, dass die Peilung nur mit einer einzigen Peileinrichtung oder Peilerantenne durchgeführt wird, und dass bei einer erkannten Unstimmigkeit bei der Zuordnung von der Zentrale eine manuelle Korrektur erfolgt oder an den Verkehrsteilnehmer eine mündliche oder automatische Aufforderung zur erneuten mündlichen oder automatischen Durchgabe seiner Kennung von der Zentrale ausgelöst wird.

Bei einem solchen Verfahren und einer solchen Anordnung werden bei den Verkehrsteilnehmem praktisch überhaupt keine zusätzlichen Anlagen oder Geräte verlangt. Das System kommt nämlich mit der beispielsweise auf den Flughäfen schon in der Regel vorhandenen Einrichtung zur Positionsbestimmung aus und setzt zusätzlich nur das bei den Verkehrsteilnehmem vorhandene Kommunikationssystem, also Funkgeräte für die Sprechverbindung mit der Zentrale oder Bodenstation, voraus. Über solche Funkgeräte verfügen Flugzeuge ganz selbstverständlich und auch die übrigen Fahrzeuge im Flugplatzbereich müssen, schon zur Entgegennahme von Anweisungen, stets über Funkgeräte verfügen (man denke beispielsweise an zu dirigierende Busse, Feuerwehrfahrzeuge, Transportwagen, Wartungsfahrzeuge).

Zu diesen ohnehin vorhandenen Elementen wird jetzt zusätzlich nur in der Zentrale, also beispielsweise dem Tower auf dem Flughafen, eine Spracherkennungseinrichtung benötigt, sowie ein Rechner bzw. eine Datenverarbeitungsanlage, die zur Datenfusion in der Lage ist.

Das erfindungsgemäße Verfahren arbeitet zunächst, wie schon auf Flughäfen bekannt, mit einer Positionsbestimmung eines Verkehrsteilnehmers aufgrund einer Peilung im herkömmlichen Sinne und Zusatzinformation, wie der Messung aus einem Primärradar oder einer bekannten Landebahn oder Rollweg. Diese Ortungsdaten werden der Datenverarbeitungsanlage zugeführt.

Die Peilung des Verkehrsteilnehmers durch die Zentrale setzt eine Funkverbindung zwischen dem Verkehrsteilnehmer und der Zentrale voraus, die auch jetzt schon standardmäßig mit einer Kennung beginnt, beispielsweise dem Flugzeugkennzeichen oder auch einer anderen, den Verkehrsteilnehmer identifizierenden sprachlichen Wiedergabe. Spracherkennungseinrichtungen sind in der Lage, aus einer solchen Kommunikation dieses Kennzeichen herauszulesen oder zumindest es als Identifizierungskennzeichen zu erkennen. Der auslösende Faktor für die Identifizierung des Verkehrsteilnehmers ist dieser selbst aufgrund seiner durchgegebenen Kennung, die er seiner Meldung voranstellt. Diese Meldung dient als Quelle der Identifizierung. Aus ihrem Inhalt liest die Spracherkennung die für die Identifizierung relevanten Daten heraus. Die von der Zentrale ermittelte Richtung, aus der die Meldung eintrifft, wird zur Positionsbestimmung des Verkehrsteilnehmers genutzt.

Diese in der Spracherkennung identifizierte Verkehrsteilnehmerkennung wird. nun in der Datenverarbeitungsanlage fusioniert mit den Daten aus der Positionsbestimmung.

Dieser Vorgang gestattet eine eindeutige Zuordnung der ldentifizierung zu einem Ortungsdatum eines Verkehrsteilnehmers und erfolgt nur einmal, wenn klargestellt ist, welches identifizierte Verkehrsteilnehmerobjekt nun einer be-, stimmten Peilung zugeordnet werden kann.

Bewegt sich dieser Verkehrsteilnehmer nun auf dem Flughafen, so läuft seine Identifizierung mit ihm. Dem Rechner ist bekannt, dass sich Verkehrsteilnehmer nicht in Sprüngen bewegen und dass sie von den entsprechend vorgezeichneten Wegen üblicherweise nicht abkommen.

Die Ergebnisse der Datenfusion können also entsprechend einer Ausgabeeinheit zur Verfügung gestellt werden, beispielsweise Bildschirmen im Tower oder auch Aufzeichnungsgeräten.

Für den Fall, dass es mit der eindeutigen Identifizierung während der Weiterverfolgung Probleme gibt, beispielsweise weil sich die Wege zweier Verkehrsteilnehmer sehr eng benachbart kreuzen, ist es bevorzugt, dass dieser Umstand von dem Verfahren erkannt wird. Im Rechner wird ein Label zur Gefahrenidentifizierung gesetzt. Dadurch tritt der Fluglotse oder aber der Rechner selbst in Aktion. Der oder die Verkehrsteilnehmer werden zur erneuten Abgabe einer Teilnehmerkennung in dem Sprachkommunikationsweg aufgefordert. Eine solche Aufforderung kann entweder ergehen, indem das Überwachungspersonal in der Zentrale eine solche Aufforderung erlässt, oder aber auch vom Rechner aus per synthetischer Sprache oder funktechnisch in anderer Form. Wiederum geht dann die Quelle der Identifizierung vom Verkehrsteilnehmer aus.

Mit der Erfindung ist es möglich, ein kooperatives Sensorsystem auf Flugplätzen, in Flughafenbereichen oder auch in anderem Zusammenhang aufzubauen. Hierzu wird der an Flugplätzen vorhandene Peiler und sonstige nicht kooperative Ortungssysteme, wie beispielsweise das oben genannte ASDE, kombiniert mit den in Flugzeugen vorhandenen Funkgeräten für die Sprechverbindung mit der Zentrale. Die Erfindung nutzt Rechner zur Richtungsund Positionsbestimmung und zur Erkennung des gesprochenen Wortes zur Identifizierung des Verkehrsteilnehmers und zur eindeutigen Objektverfolgung.

Mit der Erfindung können auch andere Verkehrsüberwachungen stattfinden, bei denen ähnliche Grundbedingungen herrschen, beispielsweise in Schifffahrtshäfen oder auch in größeren Industriegeländen.

Die Erfindung wird im Folgenden anhand der Zeichnung näher erläutert. Es zeigen:
- **Figur 1**: schematisch den Ablauf des erfindungsgemäßen Verfahrens; und
- **Figur 2**: einen speziellen kritischen Zustand.

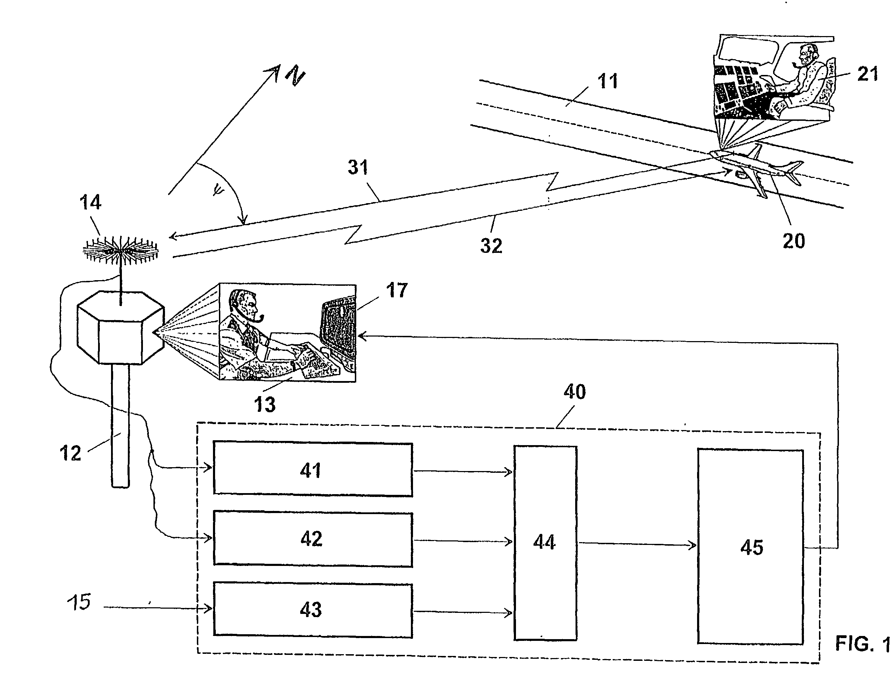

**Figur 1** zeigt eine schematische Übersicht über die Gesamtsituation. Zu den hier rein schematisch dargestellten Einrichtungen auf einem Flughafen gehört beispielsweise eine Rollbahn 11, eine Zentrale in Form eines Towers 12, in welchem sich ein Lotse 13 befindet, ferner eine Peiler-Antenne 14 und die Ortung 15 aus einem Primärradar.

Auf der Rollbahn 11 ist schematisch ein Verkehrsteilnehmer 20, hier ein Flugzeug, mit einem Piloten 21 dargestellt. Der Pilot 21 des Verkehrsteilnehmers 20 gibt nun eine Meldung an den Tower 12 bzw. den dort sitzenden Lotsen 13. Diese Meldung ist hier als Funkspruch 31 markiert. Der Funkspruch 31 beginnt üblicherweise mit der Kennung des Verkehrsteilnehmers 20. Sei beispielsweise dessen Kennung D-ADAM, so würde die Meldung 31 beginnen mit "Braurischweig Tower, hier ist Delta-Alpha-Delta-Alpha-Mike". Der Lotse 13 im Tower 12 gibt bei seinen Funksprüchen 32 üblicherweise eine Wiederholung dieser Kennung oder einer eindeutigen Abkürzung derselben, um dem Verkehrsteilnehmer 20 anzuzeigen, dass dieser gemeint ist.

Die Peiler-Antenne 14 nimmt bei jeder Meldung des Verkehrsteilnehmers 20 zu ihm eine Richtungsbestimmung vor, die hier durch den Winkel "PSI" im Verhältnis zur Nordrichtung angedeutet ist. Diese Peilung erfolgt durch eine Richtungsbestimmung des eintreffenden Funkspruches vom Verkehrsteilnehmer, also der eingehenden Kommunikationsübertragung, der Quelle der Identifizierung. In Verbindung mit der Ortung 15 des Primärradars oder anderer Informationen über den Ort oder die benutzte Bahn kann für mehrere Verkehrsteilnehmer der zu identifizierende dann eindeutig erkannt werden. Alle diese Daten werden nun schematisch (in der unteren Bildhälfte dargestellt) einer Datenverarbeitungsanlage 40 zugeführt. In dieser Datenverarbeitungsanlage 40 ist infolge eines Blockdiagramms schematisch wiedergegeben, was verfahrensmäßig geschieht:

Vom Tower 12 bzw. direkt von der Peiler-Antenne 14 werden einerseits Daten über die Richtungsbestimmung des Verkehrsteilnehmers 20 in einem Feld 41 verarbeitet, andererseits findet in einer Spracherkennungseinrichtung 42 eine Aufbereitung der aufgezeichneten Kommunikation des Lotsen 13 mit dem Piloten 21 statt, zum dritten werden beispielsweise von einem Primärradar oder von anderen Quellen weitere Daten 15 zur Flugzeugposition zugeführt und im Feld 43 aufbereitet. Die Spracherkennungseinrichtung 42 ist so ausgelegt, dass sie die von dem Verkehrsteilnehmer gesprochenen Wortinformationen auswertet. Dadurch geschieht, im Unterschied zum Stand der Technik, eine direkte Auswertung dessen, was vom Verkehrsteilnehmer kommt, ohne Umweg über die Wiederholung dieser Informationen in für die Spracherkennungseinrichtung geeigneter Form. Ein Fehler durch Verhören durch den Lotsen tritt hier also nicht auf. Eine Überprüfung auf Richtigkeit der bei der Spracherkennungseinrichtung eingehenden Information kann aber durch Vergleich dessen, was der Lotse hört und was er angezeigt bekommt oder durch Vergleich der im Rechner gespeicherten Kennung eines erwarteten Verkehrsteilnehmers und dem Ergebnis der Spracherkennung erfolgen. Eine Unstimmigkeit wird im letztgenannten Falle dem Lotsen zur Anzeige gebracht. Die Korrektur erfolgt entweder automatisch, wenn sie geringfügig ist oder vom Lotsen aus durch korrekte Eingabe der Kennung und deren Verarbeitung in der Spracherkennung oder schließlich durch dessen Aufforderung an den Verkehrsteilnehmer zur erneuten Durchgabe der Kennung.

Die Felder 41 und 43 geben dann Daten über den von ihnen ermittelten Winkel PSI bzw. die Koordinaten x, y, z des Verkehrsteilnehmers weiter an das Feld 44 des Blockschaltbildes, in dem eine Datenfusion stattfindet mit den ermittelten Ergebnissen der Spracherkennungseinrichtung 42, hier beispielsweise der Feststellung, daß es sich bei dem Verkehrsteilnehmer 20 um "D-ADAM" handelt. Die Datenfusion im Feld 44 bildet aus Position und Bewegungsrichtung des Verkehrsteilnehmers einerseits, und seiner Identifikation andererseits eine Einheit im Rechner und sichert so die Zusammengehörigkeit beider Informationen zu einem Objekt. Dieses Datum wird an das Feld 45 weitergegeben. Im Feld 45 ist eine Situationsverfolgung vorgesehen, d. h. dass die ständig aktualisierten neuen Daten aus den Feldern 41 und 43 immer weiter verarbeitet werden; die Spracherkennungseinrichtung 42 kann, muss aber nicht notwendig zur weiteren Aktualisierung herangezogen werden. Wird sie herangezogen, greift sie auf die Sprachinformation zurück, die vom Verkehrsteilnehmer ausgeht. Als Ausgabeergebnis der Situationsverfolgung 45 wird eine entsprechende Ausgabe an eine Ausgabeeinheit, beispielsweise einen Bildschirm 17 vor dem Lotsen 13, weitergegeben.

Eine besonders gute Zuordnung ist natürlich möglich, weil es sich bei der Peiler-Antenne 14 um eine Antenne handelt, die auf die Eingangsrichtung der Funkmeldung 31 reagiert. Dann ist auch eine zeitliche Identifikationsmöglichkeit besonders einfach möglich.

Solche Peiler mit feststehender Antenne sind an den meisten Flugplätzen schon installiert.

Die Sprachkommunikation 31/32 zwischen Pilot 21 und Lotsen 13 wird im Wechsel zwischen Flugzeug (VerkehrsteiInehmer 20) und Tower 12 umgeschaltet. Der Pilot meldet sich nach oder vor dem Anrufen des Towers 12 (z.B. "Braunschweig-Tower") jeweils mit dem Flugzeugkennzeichen oder einer anderen Kennung, wenn es sich beispielsweise um einen anderen Verkehrsteilnehmer, handelt. Der Lotse 13 wiederholt das Kennzeichen oder die Kennung bei seiner Antwort.

Der im wesentlichen genormte Erkennungscode bietet eine ausgezeichnete Grundlage für die automatische Erfassung der Kennung durch Analyse des digitalisierten Sprachsignals mit Hilfe von Programmen zur Worterkennung. Solche Programme sind zweckmäßig in der Lage, trotz der Störungen im Funksprechverkehr aus den gesprochenen Worten des Piloten die gewünschte Information herauszufiltem. In Zweifelsfällen kann eine weitere Auswertung dessen erfolgen, was der Lotse an Informationen wiederholt und/oder selbst abgibt. Die Ergänzung des Peilers 14 durch eine Digitalisierung für die gemessene Richtung mit gleichzeitiger rechnergesteuerter Analyse der vom Piloten 21 und vom Lotsen gesprochenen Worte zur Erfassung der Kennung des Verkehrsteilnehmers 20 ist von besonderem Vorteil.

In dem Rechner bzw. der Datenverarbeitungsanlage 40 werden zur Datenfusion 44 neben diesen beiden Informationen - Richtung und Kennung - wie erwähnt auch zusätzliche Informationen, wie Messsignale anderer Teilsensoren oder die Kenntnis des vorbestimmten Bewegungsablaufs, z.B. Landebahn oder Rollweg verarbeitet. Dieses dient zur Ortung, im Regelfalle aber nicht zur Identifizierung der Verkehrsteilnehmer.

Durch die Datenfusion wird eine Verarbeitung der eingehenden Informationen zur sicheren Ortung und Identifizierung jedes einzelnen Teilnehmers möglich.

Sinnvoll ist es, wenn neben den erwähnten Sensordaten auch ein Zugriff auf die Daten für die Flugplatztopographie, für Flug- und Rollpläne der Verkehrsteilnehmer 20 und so weiter vorgesehen ist. Dieses ist in der Figur 1 zur Vereinfachung weggelassen.

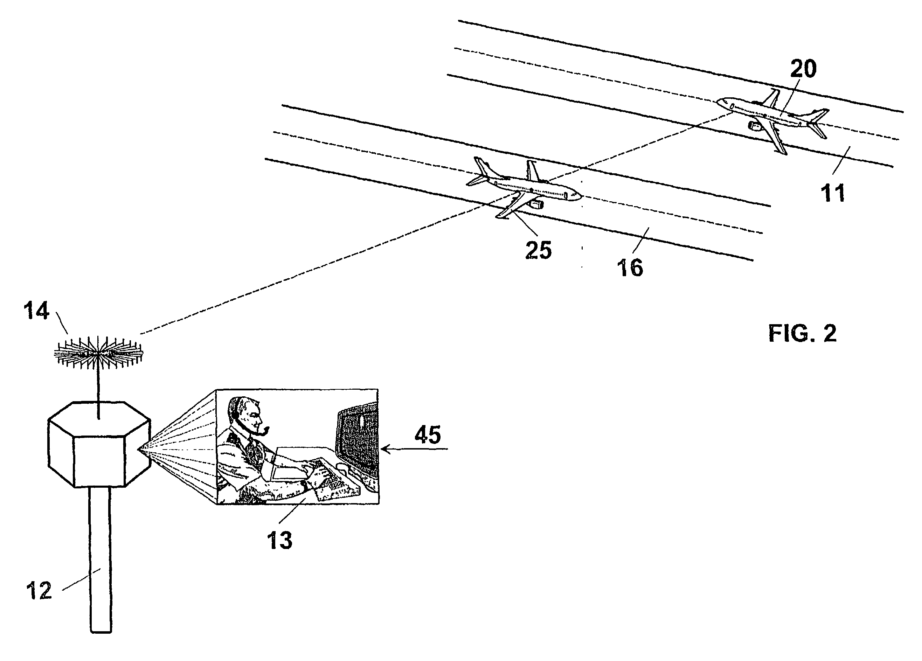

**Figur 2** deutet eine Situation an, bei der es möglicherweise zu einer nicht eindeutigen Identifikation kommt. Zwei Verkehrsteilnehmer 20, 25 befinden sich aus Richtung der Peilerantenne 14 in derselben Richtung, und es kann während der Situationsverfolgung 45 zu Zweifeln über die Identität der beiden Verkehrsteilnehmer 20, 25 kommen. Aber auch dieses erkennt die Datenverarbeitungsanlage 40. Sie setzt ein Label zur Gefahrenidentifizierung und meldet es beispielsweise über den Bildschirm 17 dem Lotsen 13, der die Verkehrsteilnehmer 20 und 25 auffordern kann, einfach eine erneute Teilnehmerkennung sprachlich abzugeben. Diese Aufforderung kann bevorzugt aber auch vom Rechner aus per synthetischer Sprache oder Funktechnik in anderer Form erfolgen.

Auch die Kenntnis der Unterschiede der Rollbahnen 11 und 16 kann für die Datenverarbeitungsanlage 40 schon zur eindeutigen Zuordnung der empfangenen Information ausreichen.

### Bezugszeichenliste

- 11: Rollbahn
- 12: Tower
- 13: Lotse
- 14: Peiler-Antenne
- 15: Ortung
- 16: Rollbahn
- 17: Bildschirm

- 20: Verkehrsteilnehmer
- 21: Pilot
- 25: Verkehrsteilnehmer

- 31: Funkspruch/Pilot
- 32: Funkspruch/Lotse

- 40: Datenverarbeitungsanlage
- 41: Feld (Daten über Richtungsbestimmung)
- 42: Spracherkennungseinrichtung
- 43: Feld (Daten Primärradar etc.)
- 44: Feld (Datenfusion)
- 45: Feld (Situationsverfolgung)

## Patentansprüche

1. Anordnung zur Verkehrsüberwachung, insbesondere auf Flughäfen, bei der Einrichtungen (14, 15) zur Bestimmung von Positionen von Verkehrsteilnehmem (20,25) vorgesehen sind,
eine Kommunikationseinrichtung zur Kommunikation (31, 32) zwischen Verkehrsteilnehmem und einer Zentrale (12) vorgesehen ist,
eine Spracherkennungseinrichtung (42) zur Spracherkennung einer Funkmeldung der Verkehrsteilnehmer (20, 25) und optional der Zentrale (12) auf seiten der Zentrale vorgesehen ist,
eine Datenverarbeitungsanlage (40) vorgesehen ist,
eine Verbindung zwischen Datenverarbeitungsanlage und der oder den Einrichtungen (14, 15) zur Positionsbestimmung und der Spracherkennungseinrichtung (42) vorgesehen ist,
und die Datenverarbeitungsanlage Mittel zur Datenfusion ihrer Eingangsdaten zur Verfolgung der eindeutigen Ortung und Identifizierung der Verkehrsteilnehmer (20, 25) und Weitergabe der Zuordnungsergebnisse an eine Ausgabeeinheit (17) aufweist,
**dadurch gekennzeichnet,**
**dass** unter den Einrichtungen (14, 15, 43) zur Bestimmung von Positionen von Verkehrsteilnehmem (20, 25) eine eizeln Peileinrichtung oder Peilerantenne (14) zur Richtungsfeststellung der Kommunikationsübertragung ist, und
**dass** zusätzlich noch eine weitere Ortungseinrichtung (15) vorgesehen ist.

2. Anordnung nach Anspruch 1,
**dadurch gekennzeichnet,**
**dass** die weitere Ortungseinrichtung ein Primärradar (15) ist, welches zur Richtungsbestimmung eintreffender Funksprüche (31) zur Ortung von Verkehrsteilnehmern (20, 25) dient.

3. Verfahren zur Verkehrsüberwachung, insbesondere auf Flughäfen, bei dem
- eine Positionsbestimmung eines Verkehrsteilnehmers durch Peilung und mittels weiterer Informationen erfolgt,
- eine Kommunikation zwischen Verkehrsteilnehmer und einer Zentrale aufgezeichnet und einer Spracherkennung auf seiten der Zentrale zugeführt wird,
- eine mit der Meldung des Verkehrsteilnehmers durchgegebene Kennung in der Spracherkennung seitens der Zentrale identifiziert und dem positionsbestimmten Verkehrsteilnehmer zugeordnet wird,
- die zugeordnete Identifizierung des positionsbestimmten Verkehrsteilnehmers kontinuierlich beibehalten wird, wobei die Quelle der Identifizierung bei dem Verkehrsteilnehmer liegt, und
- eine eindeutige Zuordnung zwischen Position und Identifizierung erfolgt,
**dadurch gekennzeichnet,**
**dass** die Peilung nur mit einer einzigen Peileinrichtung oder Peilerantenne durchgeführt wird, und
**dass** bei einer erkannten Unstimmigkeit bei der Zuordnung von der Zentrale eine manuelle Korrektur erfolgt oder an den Verkehrsteilnehmer eine mündliche oder automatische Aufforderung zur erneuten mündlichen oder automatischen Durchgabe seiner Kennung von der Zentrale ausgelöst wird.

## Claims

1. Arrangement for monitoring traffic, in particular at airports, in which units (14, 15) for determining the positions of traffic participants (20, 25) are provided,
a communications unit for communication (31, 32) between traffic participants and a control centre (12) is provided,
a speech recognition unit (42) for recognition of a radio message of the traffic participants (20, 25) and optionally of the control centre (12) is provided on the part of the control centre,
a data processing unit (40) is provided,
a connection is provided between the data processing unit and the unit or units (14, 15) for determining position and the speech recognition unit (42),
and the data processing unit has means for fusing its input data to track the clearly defined bearing and identification of the traffic participants (20, 25) and relay the coordination results to an output unit (17),
**characterised in that**
amongst the units (14, 15, 16) for determining the positions of traffic participants (20, 25) is a single direction finder or direction finder antenna (14) for establishing the direction of the communication transmission, and
**in that** a further locating device (15) is additionally provided.

2. Arrangement according to Claim 1,
**characterised in that**
the further locating device is a primary radar system (15) which serves to determine the direction of incoming radio messages (31) to locate traffic participants (20, 25).

3. Method of traffic monitoring, in particular at airports, in which
- a position of a traffic participant is determined by taking a bearing and by means of further information,
- a communication between the traffic participant and a control centre is recorded and passed to a speech recognition unit on the part of the control centre,
- an identification code transmitted with the message of the traffic participant is identified in the speech recognition unit on the part of the control office and is assigned to the traffic participant whose position has been determined,
- the assigned identification of the traffic participant whose position has been determined is continuously retained, in which case the source of identification lies with the traffic participant, and
- a clearly defined coordination between position and identification is achieved,
**characterised in that**
the bearing is taken only with a single direction finder or direction finder antenna, and
**in that** in the case of a recognised discrepancy in coordination a manual correction is made by the control centre, or a verbal or automatic request to the traffic participant for a repeat verbal or automatic communication of the identification code of said traffic participant is initiated by the control centre.

## Revendications

1. Installation pour surveiller le trafic, en particulier, aéroportuaire, au niveau de laquelle sont prévus, des dispositifs 14, 15, servant à déterminer les positions des utilisateurs mobiles, 20, 25, un dispositif de communication permettant aux utilisateurs mobiles et au poste central 12 de dialoguer entre eux, un dispositif de reconnaissance vocale 42, destiné, au niveau du poste central, à la reconnaissance vocale d'un message radio émis par les utilisateurs mobiles 20, 25, et occasionnellement, par le poste central 12, une installation de traitement des données 40, une liaison entre l'installation de traitement des données et le ou les dispositifs 14, 15 servant à déterminer des positions et le dispositif de reconnaissance vocale 42, et au niveau de laquelle l'installation de traitement des données présente des moyens réservés à la technique de fusion de ses données d'entrée pour suivre la localisation précise et l'identification des utilisateurs mobiles 20, 25 et à la transmission des résultats des affectations au niveau d'une unité de sortie 17, **caractérisée en ce que** sont entendus dispositifs 14, 15, 43 servant à déterminer des positions des utilisateurs mobiles 20, 25, un dispositif radiogoniométrique ou une antenne radiogoniométrique 14, permettant de déterminer la direction de la transmission de la communication, et **en ce qu'**est également prévu un dispositif supplémentaire de localisation 15.

2. Installation selon la revendication 1, **caractérisée en ce que** le dispositif supplémentaire de localisation consiste en un radar primaire 15, servant à déterminer la direction des messages radio 31 émis pour localiser des utilisateurs mobiles 20, 25.

3. Procédé pour surveiller le trafic, en particulier, aéroportuaire, au niveau duquel
- il est possible de déterminer la position d'un utilisateur mobile grâce au repérage et à l'aide d'informations supplémentaires,
- une communication est instaurée entre des utilisateurs mobiles et un poste central, une reconnaissance vocale étant établie du coté du poste central,
- un signal d'identification émis avec le message de l'utilisateur mobile est identifié, au niveau du poste central, dans la reconnaissance vocale et affecté à l'utilisateur mobile dont la position est déterminée,
- l'identification attribuée de l'utilisateur mobile dont la position est déterminée est en permanence conservée, la source de l'identification étant située au niveau de l'utilisateur mobile, et,
- une affectation unique est établie entre la position et l'identification,
**caractérisé en ce que** le repérage est réalisé uniquement à l'aide d'un seul dispositif radiogoniométrique ou d'une seule antenne radiogoniométrique, que toute erreur identifiée, survenue lors de l'affectation, peut être corrigée au niveau du poste central, ou que ce dernier a la possibilité de demander oralement, et ce, que ce soit automatiquement ou bien manuellement, à l'utilisateur mobile de transmettre à nouveau oralement ou automatiquement son identification.
